# EUROPEAN PATENT SPECIFICATION

(11) **EP 3 120 024 B1**
(45) Date of publication and mention of the grant of the patent: **17.10.2018**
(21) Application number: 14710925.0
(22) Date of filing: 19.03.2014
(51) Int. Cl.: F04B 53/10, F16K 15/18, F04B 49/02, F04B 49/06

(54) **FLOW CONTROL SYSTEM FOR PUMPING DEVICE**
SYSTEM ZUR STRÖMUNGSSTEUERUNG FÜR EINE PUMPVORRICHTUNG
SYSTÈME DE CONTRÔLE DE DÉBIT D'UN DISPOSITIF DE POMPAGE

(43) Date of publication of application: 25.01.2017
(73) Proprietor: Husqvarna AB, 561 82 Huskvarna (SE)
(72) Inventor: KAUPP, Rainer, 89143 Blaubeuren (DE); GUNGL, Johannes, 89079 Ulm-Eggingen (DE)
(74) Representative: Finkele, Rolf
(86) International application number: PCT/EP2014/055523
(87) International publication number: WO 2015/139744

(56) References cited:
- EP-A2- 1 767 789
- WO-A1-98/36339
- GB-A- 1 211 474
- US-A- 5 037 062
- US-A1- 2002 189 687
- US-A1- 2007 025 863

## Description

### TECHNICAL FIELD

The present invention relates to a pumping device, and more particularly to a flow control system for the pumping device.

### BACKGROUND

Pumping devices or pump apparatuses such as, electric pressure pumps, pressure tank units, or fuel-powered pressure pumps, which are generally used for various types of water management applications including gardening, agriculture, industrial or domestic water supply, include a flow control system. A typical flow control system includes a non-return valve or one-way valve having a closing member movable between an open position and a closed position to allow fluid (*e.g.* water) flow in only one direction. The non-return valve may include a restoring means, such as a spring, to apply a restoring force on the closing member to maintain the closing member in the closed position. Thus, in an absence of a hydrostatic fluid pressure in the pumping device the non-return valve prevents any backflow of the fluid or inflow of air into the pumping device or suction line.

In order to ensure a smooth intake of the fluid from a fluid reservoir, such as water tank or water-well, generally after a new installation of the pumping device or after performing a maintenance operation on the pumping device, an actuation mechanism is provided. The actuation mechanism is configured to forcibly move the closing member of the non-return valve to the open position to facilitate the intake of the fluid through the suction line. The actuation mechanism may apply a counteracting force on the closing member which acts against the restoring force of the non-return valve, so that already present air in the pumping device can flow out and an inflow of the fluid into the pumping device is effectively facilitated. Conventionally, the actuation mechanism includes an actuation element embodied as a lever which is pivotally connected to the closing member of the non-return valve. The actuation element is movable to an operative position from an inoperative position to apply the required counteracting force to move the closing member to the open position, particularly during a starting-up of the pumping device. During the starting-up of the pumping device, an operator is required to manually shift the actuation element from the inoperative position to the operative position. Further, after a pre-set hydrostatic fluid pressure builds in the pumping device the operator has to manually shift the actuation element to the inoperative position from the operative position to release the counteracting force on the closing member of the non-return valve. This type of flow control system essentially requires a regular manual intervention by the operator during the starting-up and a normal working state of the pumping device.

WO 98/36339 A1 **discloses a control device for a pump comprising a microprocessor, a pressure sensor and a flow sensor, particularly a Hall-effect sensor. The flow sensor and the pressure sensor are in the outlet section and are used to pilot the operation of the pump, such that the pump is started when the pressure in the outlet falls below a threshold and the pump is shut off when the water flow ceases.**

US 2007/025863 A1 **discloses an automatic check valve releases apparatus in which an actuation element is electro-magnetically biased towards the operative position by a solenoid to move the closing member of the check valve towards the open position. Similar applies to the ball valve release for a molecular-ray-apparatus of** US 5 037 062 A1**.**

European Patent Application No. 1,767,789 A2 discloses a fluid control system, which allows a simplified starting-up of the pumping device. The disclosed fluid control system includes a non-return valve and an actuation mechanism having an actuation element, such as control pin movable to an operative position from an inoperative position to apply the counteracting force to move a closing member of the non-return valve to an open position. The fluid control system ensures that once a pre-set hydrostatic fluid pressure is reached in the pumping device, under the action of the hydrostatic fluid pressure the actuation element shifts to the inoperative position, without any manual intervention required from the operator. This automatically releases the counteracting force on the closing member of the non-return valve. Even though, in this case during starting-up of the pumping device, generally after the new installation of the pumping device or after performing the maintenance operation on the pumping device, the operator is required to manually shift the actuation element to the operative position from the inoperative position. Therefore, as aforementioned, the actuation element is inevitably required to be manually shifted to the operative position to start-up the pumping device, failure to which may cause ineffective pumping operation and also may decrease the life of the pumping device in the long run.

Therefore, in light of the foregoing, there is a need for an improved flow control system for a pumping device or a pump apparatus.

### SUMMARY

In view of the above, it is an objective of the present invention to solve or at least reduce the problems discussed above. The objective is achieved with a pumping device as defined in claim 1. The pumping device includes an inlet, an outlet, and a pump housing defining a pressure chamber which is in fluid communication with the inlet and the outlet. The inlet and the outlet may be further connected to a suction line and a discharge line, respectively. The pumping device further includes a flow control system having a non-return valve and an actuation mechanism. The non-return valve includes a closing member which is movable between an open position and a closed position to allow a unidirectional fluid flow, and the actuation mechanism includes an actuation element which is movable between an operative position and an inoperative position with respect to the closing member. In the operative position, the actuation element is configured to apply a counteracting force to move the closing member to the open position. Further, the actuation element is biased towards the operative position such that during the starting-up of the pumping device an operator is not required to manually shift the actuation element from the inoperative position to the operative position. Moreover, while the closing member is in the open position, any air already present in the pumping device can flow out and an inflow of the fluid into the pumping device is effectively facilitated.

Following the starting-up of the pumping system, during a normal working status of the pumping device the actuation element is configured to be moved to the inoperative position by a fluid pressure acting on the actuation element again without any sort of manual intervention from the operator. Moreover, while the actuation element is in the inoperative position the non-return valve automatically prevents the backflow of the fluid in the pressure chamber and/or the suction line. The actuation mechanism may include a positioning means such as spring which is configured to constantly bias the actuation element towards the operative position.

The flow control system may be disposed on the discharge line along with a pressure sensor and a flow sensor. The pressure sensor and the flow sensor are configured to monitor a fluid pressure and the fluid flow rate in the discharge line, respectively. A controller operatively connected to the pressure sensor and the flow sensor is configured to start an operation of the pumping device in case the fluid pressure in the discharge line drops below a threshold start-up pressure. Also, the controller is configured to stop an operation of the pumping device in case a fluid flow ceases due to an obstruction in discharge line. The flow sensor may be a Hall-effect sensor. According to an aspect of the present invention, if a tap or a faucet is connected to the discharge line and the operator closes the tap or the faucet, the non-return valve moves to the closed position to prevent the backflow of the fluid and simultaneously the controller stops the operation of the pumping device or the pump apparatus. Once the operator opens the tap or the faucet again the controller starts the operation of the pumping device or the pump apparatus and the non-return valve moves to the open position due the water flow caused by the pumping action. This provides a complete automatic operation of the pumping device or the pump apparatus without any manual intervention during the starting-up or the pump and/or the normal working status.

### BRIEF DESCRIPTION OF THE DRAWINGS

The invention will be described in more detail with reference to the enclosed drawings, wherein:
FIG. **1** is a block block diagram of a pumping device, according to an embodiment of the present invention;
FIG. **2** illustrates a perspective view of a pump apparatus, according to an embodiment of the present invention;
FIG. **3A** is a partial sectional view of the pump apparatus of FIG. **2** about AA';
FIG. **3B** is a partial sectional view of the pump apparatus of FIG. **2** about AA'; and
FIG. **3C** is a partial sectional view of the pump apparatus of FIG. **2** about AA'.

### DESCRIPTION OF EMBODIMENTS

The present invention will be described more fully hereinafter with reference to the accompanying drawings, in which example embodiments of the invention incorporating one or more aspects of the present invention are shown. This invention should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

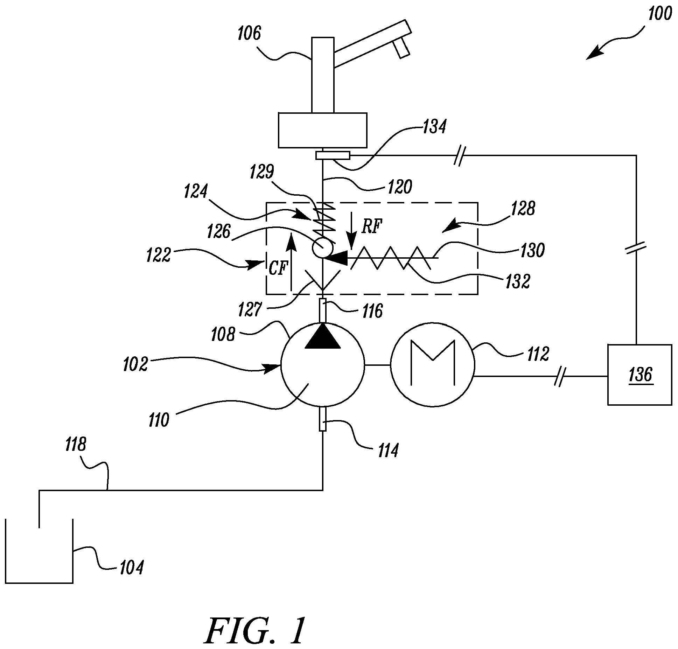

FIG. **1** is a block diagram of a pumping device **100,** according to an embodiment of the present invention. The pumping device **100** includes a rotodynamic pump **102,** such as a centrifugal pump (hereinafter referred to as the pump **102**), used for water management, in particular for use in house, garden and/or industrial application. In various other embodiments, the pump **102** may be a positive displacement pump, such as a gear pump, a screw pump, or the like. The pump **102** is configured to pressurize a fluid (*e.g.* water or rain-water or waste-water) from a fluid reservoir **104,** such as a low pressure water tank, a water-well, a rainwater tank, a garden pond, and the like, and deliver a pressurized fluid at a fluid release control valve **106,** such as a tap, a faucet, or a spigot. The fluid release control valve **106** may be used for further connecting the pumping device **100** to an irrigation sprinkler or watering hose for irrigation of lawns and/or crops. Alternatively, the fluid release control valve **106** may be used as sampling point for the pressurized fluid delivered by the pumping device **100.**

The pump **102** includes a pump housing **108** which defines a pressure chamber **110.** The pressure chamber **110** may house an impeller, a propeller, or a rotor which is driven by an electric motor **112.** The electric motor **112** may be mechanically coupled to the impeller via a pump shaft. In an alternative embodiment, the pump **102** may include a fuel powered garden pumps used for rain-water management, domestic water supply, or waste-water discharge.

The pump **102** further includes at least one inlet **114** and at least one outlet **116** which are provided in fluid communication with the pressure chamber **110** and arranged for the intake and discharge of the fluid, respectively. A suction line **118** is connected to the inlet **114** and configured to supply a low-pressure fluid from the fluid reservoir **104** to the pressure chamber **110.** The suction line **118** may include at least one suction hose/pipe which is connected to the inlet **114** via a hose connector and/or a pre-filter unit. Further, a discharge line **120** is connected to the outlet **116** and configured to deliver the pressurized fluid from the pressure chamber **110** at the fluid release control valve **106.** The discharge line **120** may include at least one discharge hose/pipe which is connected to the outlet **116** via a hose connector.

According to an embodiment of the present invention, the pumping device **100** may include a flow control system **122.** As illustrated in FIG. **1****,** the flow control system **122** may be disposed on the discharge line **120** and configured to separate the pressure chamber **110** from the discharge line **120** while the fluid release control valve **106** is closed and/or an obstruction is present in the discharge line **120.** Thus, the flow control system **122** prevents the fluid from draining back into the pressure chamber **110** and the suction line **118.** Additionally, the flow control system **122** may be used to deliver the pressurized fluid at a pre-set pressure.

The flow control system **122** includes a non-return valve **124** that allows a unidirectional flow of the fluid from the pressure chamber **110** towards the fluid release control valve **106** and configured to block the discharge line **120** before the hydrostatic fluid pressure in the pressure chamber **110** drops below a hydrostatic fluid pressure in the discharge line **120** due to the switch off of the electric motor **112** of the pump **102.** Thus, prevents a backflow of the fluid into the pressure chamber **110** and/or the suction line **118.** In an embodiment, the non-return valve **124** may be a check valve having a closing member **126** embodied as a movable part, such as a substantially spherical ball, received in a valve seat **127.** The closing member **126** is movable between an open position (as shown in FIG. **1**) and a closed position. In the open position, the closing member **126** is moved away from the valve seat **127** to allow an uninterrupted fluid flow through the non-return valve **124.** In the closed position, the closing member **126** is moved towards the valve seat **127** to create a seal and block the fluid flow through the non-return valve **124.** The non-return valve **124** may also include a valve spring **129** to exert a restoring force **RF** (shown by arrow) on the closing member **126** and sealingly press the closing member **126** in the valve seat **127.** This is due to the fact that in case the fluid release control valve **106** is closed and/or an obstruction is present in the discharge line **120** the hydrostatic fluid pressure in the discharge line **120** equals the hydrostatic fluid pressure in the pressure chamber **110** and thus closing member **126** is moved towards the valve seat **127** by restoring force **RF** by valve spring **129.**

According to an embodiment of the present invention, the flow control system **122** includes an actuation mechanism **128** having an actuation element **130.** The actuation element **130** is movable between an operative position (as shown in FIG. **1**) and an inoperative position with respect to the closing member **126.** In the operative position, the actuation element **130** may apply a counteracting force **CF** (shown by arrow) to move the closing member **126** away from the valve seat **127** and towards the open position. The counteracting force **CF** acting on the closing member **126** acts against the restoring force **RF** exerted by the valve spring **129** on the closing member **126.** In the inoperative position of the actuation element **130,** the counteracting force **CF** acting on the closing member **126** is released. Thus, while the actuation element **130** is in the inoperative position and while the hydrostatic fluid pressure in the pressure chamber **110** equals the hydrostatic fluid pressure in the discharge line **120** and there is no fluid flow, the closing member **126** can move towards the valve seat **127** under the action of the restoring force **RF.**

According to an aspect of the present invention the actuation element **130** is constantly biased towards the operative position to allow a smooth intake of the fluid from the fluid reservoir **104** during the starting-up of the pumping device **100,** generally after a new installation of the pumping device **100** or after performing a maintenance operation on the pumping device **100.** While the actuation element **130** is in the operative position and the closing member **126** is forcibly moved away from the valve seat **127** towards the open position, any air already present in the pumping device **100** can flow out and an inflow of the fluid into the pumping device **100** is effectively facilitated. Also, during the starting-up of the pumping device **100** an operator is not required to manually shift the actuation element **130** from the inoperative position to the operative position. According to an embodiment of the present invention, the actuation mechanism **128** may include a positioning means **132** which is configured to constantly bias the actuation element 130 towards the operative position. In the illustrated embodiment, the positioning means **132** is embodied a compression spring which is configured to transfer a spring force into the counteracting force **CF** acting on the closing member **126.** In various alternative embodiments, the positioning means **132** may be embodied as an electrical, a pneumatic, a hydraulic or an electromechanical means which is operative connected to an electric controller and configured to bias the actuation element 130 towards the operative position. In an aspect of the present invention, the counteracting force **CF** exerted by the positioning means **132** is greater than the restoring force **RF** exerted by the valve spring **129** on the closing member **126.** However, when the electric motor **112** of the pump **102** is switched off as no fluid flow is detected the hydrostatic fluid pressure in discharge line **120** is equal to or above a threshold start-up pressure. As a result of this, a combined force due to the restoring force **RF** and the hydrostatic fluid pressure acting on the closing member **126** is more than the counteracting force **CF** exerted by the positioning means **132.** Thus the actuation element **130** is not able to move into the operative position in which the closing element **126** would be moved in open position.

According to an embodiment of the present invention, the counteracting force **CF** exerted by the positioning means **132** is pre-set at slightly less than the combined force of threshold start-up pressure in the pumping device **100** and the restoring force **RF.** In an exemplary embodiment, if the threshold start-up pressure is about 2 bars the counteracting force **CF** is pre-set at about 1.8 bars. Thus, during the normal working status of the pumping device **100** the actuation element **130** is configured to be moved to the inoperative position by the hydrostatic fluid pressure in the pressure chamber **110** acting on the actuation element **130.** The hydrostatic fluid pressure in the pressure chamber **110** may act against the spring force of the positioning means **132.** This also releases the counteracting force **CF** acting on the closing member **126** of the non-return valve **124.** Further, during the normal working status of the pumping device **100,** as the hydrostatic fluid pressure in the pressure chamber **110** and the discharge line **120** is substantially equal, the uninterrupted fluid flow through the non-return valve **124** is sufficient to retain the closing member **126** in the open position and the pressurized fluid is delivered at the fluid release control valve **106.**

According to an embodiment of the present invention, the pumping device **100** may include a sensor unit **134.** The sensor unit **134** may include a flow sensor and a pressure sensor which are configured to monitor a fluid flow rate and the hydrostatic fluid pressure in the discharge line **120,** respectively. The flow sensor may embody a Hall-Effect sensor or an optical sensor, while the pressure sensor may embody a piezoelectric sensor, a strain gauge sensor or a bistable mechanical pressure switch. However, various other types of sensors and measurement units may be used in the sensing unit **134** without limiting the scope of the present invention. The sensor unit **134** may be operatively connected to a programmable controller **136** (*e.g.* an Electronic Control Unit) configured to control an operation of the pumping device **100.** The controller **136** may include a processor operably associated with other electronic components such as, a storage device or memory, a sensor interface, a control signal interface and/or various communication channels for receiving and transmitting signals. The controller **136** is configured to receive a voltage or current signal indicative of the fluid flow rate and the hydrostatic fluid pressure in the discharge line **120** from the sensor unit **134.** Based on the received signal by the controller **136,** the memory may be operable on the processor to compare the fluid flow rate and the hydrostatic fluid pressure in the discharge line **120** with a threshold fluid flow rate and the threshold start-up pressure and subsequently transmit control signals to control the operation of the pumping device **100.** In an embodiment, the threshold fluid flow rate and the threshold start-up pressure may be a predetermined based on the design and application of the pumping device **100** and stored in the memory of the controller **136.**

According to an aspect of the present invention, when the operator shuts the fluid release control valve **106** or a certain obstruction is observed in the discharge line **120** such that the fluid flow rate decreases and reaches the threshold fluid flow rate or the fluid flow ceases in the discharge line **120** and the closing member **126** may move towards the closed position, the controller **136** stops or switches off the operation of the pumping device **100** based on the control signal received from the flow sensor of the sensor unit **134.** Thus, the hydrostatic fluid pressure in the pressure chamber **110** rapidly decreases. In this situation, the restoring force **RF** and the hydrostatic fluid pressure in the discharge line **120** acts on the closing member **126** such that the combined force due to the restoring force **RF** and the hydrostatic fluid pressure acting on the closing member **126** is more than the counteracting force **CF** exerted by the positioning means **132.** Thus, the actuation element 130 cannot move to the operative position to open the non-return valve **124,** and the non-return valve **124** automatically prevents the backflow of the fluid in the pressure chamber **110** and/or the suction line **118.** Moreover, after switching off the pumping device **100** the hydrostatic fluid pressure in the discharge line **120** acts as additional forces onto the closing member **126.**

Following this, if the operator opens the the fluid release control valve **106** or remove the obstruction in the discharge line **120** such that the hydrostatic fluid pressure in the discharge line **120** decreases and reaches the threshold start-up pressure, the controller **136** starts the operation of the pumping device **100** based on the control signal received from the pressure sensor of the sensor unit **134.** Thus, the hydrostatic fluid pressure in the pressure chamber **110** gradually increases and the non-return valve **124** opens by moving the closing member **126** to the open position. Once again, when the pumping device **100** may reach the normal state of working and the actuation element 130 is moved to the inoperative position by the fluid pressure acting on the actuation element **130.** As illustrated in FIG. **1****,** the flow control systems **122** are disposed on the discharge line **120** of the pumping device **100.** However in various other embodiments, a pumping device may be embodied as a pump apparatus such that a flow control system may be arranged in a pump housing of the pump apparatus.

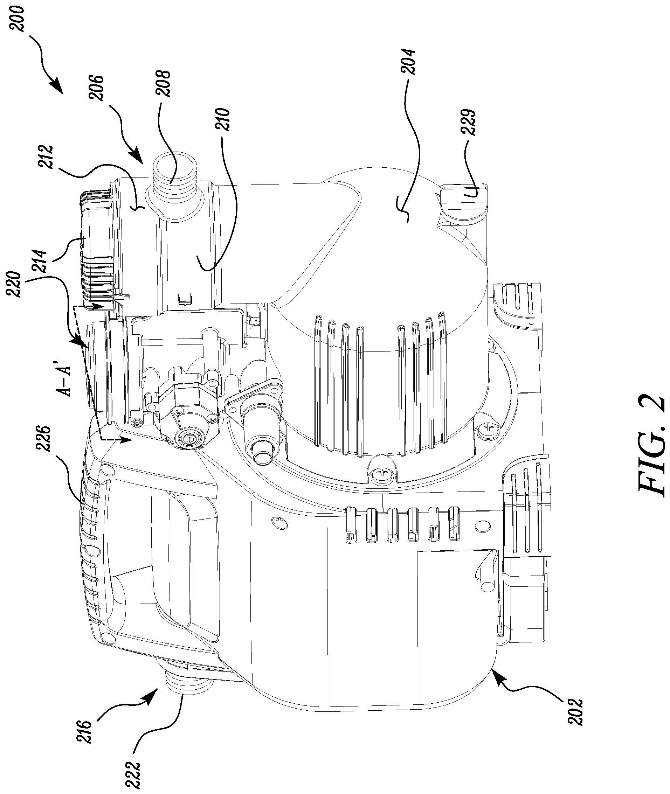

FIG. **2** illustrates a perspective view of a pumping device embodied as a pump apparatus **200,** according to an embodiment of the present invention. The pump apparatus **200** may be an electric pressure pump. In various other embodiments, the pump apparatus **200** may be include other pump assemblies, such as submersible pumps, garden pumps, fountain pumps, pressure tank units or the like.

The pump apparatus **200** includes a pump housing **202** made of an impact-resistant plastic or metal, such as stainless steel. The pump housing **202** defines a pressure chamber **204.** The pressure chamber **204** may house an electric motor driven impeller (not shown) disposed on a pump shaft, which also may be air-cooled. The pump apparatus **200** includes at least one inlet **206** arranged in fluid communication with the pressure chamber **204** for the intake of the fluid. The inlet **206** is provided with an externally threaded inlet connection port **208** to connect with a suction line via a hose connector and/or via a pre-filter. Further, a replaceable pump filter unit **210** is provided with the inlet **206** to define a filling port **212** through which, for example, the fluid into the pressure chamber **204** can be filled. The filling port **212** is generally closed a sealing cap **214.**

Further, the pump apparatus **200** may include a handle **226** connected to the pump housing **202** and can be used for carrying the pump apparatus **200** around. Moreover, the pump apparatus **200** may include a drainage port along with a drain screw **229** to empty the pump apparatus **200** during storage, transportation or a maintenance operation.

The pump apparatus **200** further includes an outlet **216.** In the illustrated embodiment, the outlet **216** may include an outlet connection port **222.** In an embodiment, the outlet connection port **222** may be swivelling type to further customize the connection according to the operator's individual requirements. Alternatively, when not in use the outlet connection port **222** may be closed by a sealing cap. It will be apparent to a person having ordinary skill in the art that, a discharge line or hose may be connected to the outlet connection port **222** via a hose connector. The outlet **216** is also arranged in fluid communication with the pressure chamber **204** via a pressure fluid line (not shown).

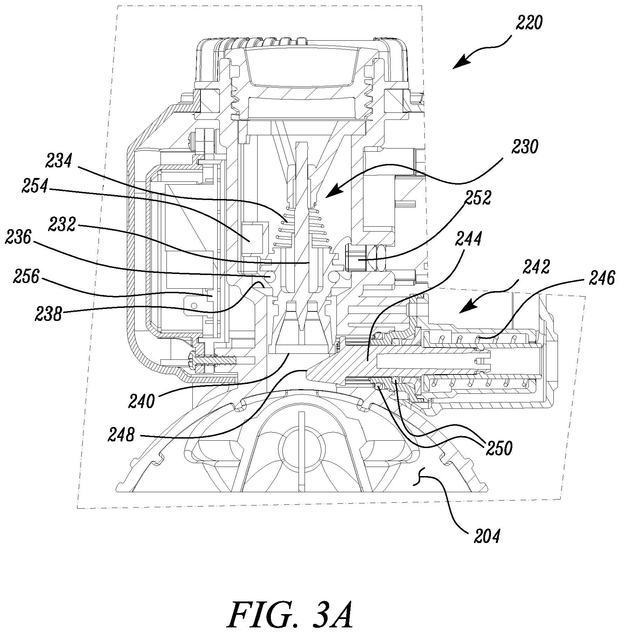

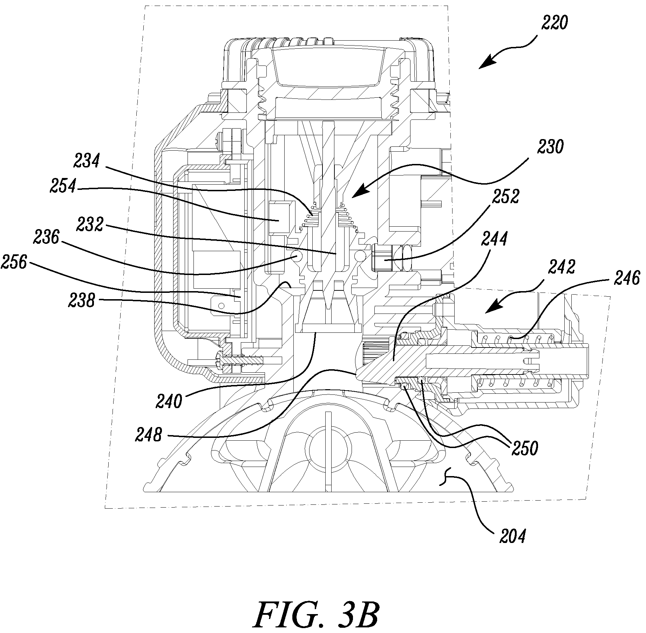

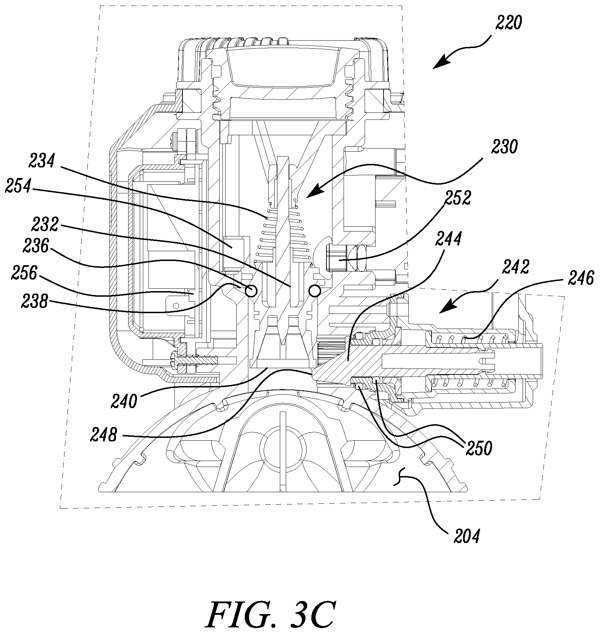

According to an embodiment of the present invention, a flow control system **220** may be disposed on the pressure fluid line disposed between the pressure chamber **204** and the outlet **216.** The flow control system **220** is configured to separate the pressure chamber **204** from the the outlet **216** while the the outlet **216** is closed and/or an obstruction is present in the the outlet **216.** Thus, the flow control system **220** prevents the fluid from draining back from the pump apparatus **200** into the suction line or supply hose. Additionally, the flow control system **220** may be used to supply the fluid at a pre-set pressure. As illustrated in FIG. **2****,** a covering member for the flow control system **220** is removed to show the details of the flow control system **220.** Moreover, FIGS. **3A****,** **3B****,** and **3C** illustrate a partial sectional view of the pump apparatus **200** about AA' to show an internal structure of the flow control system **220.**

Referring to FIG. **3A****,** the flow control system **220** includes a non-return valve **230** that allows an unidirectional flow of the fluid from the pressure chamber **204** towards the outlet **216** and configured to block the fluid flow from the discharge line **120** due to the fact that a hydrostatic fluid pressure in the pressure chamber **204** drops below a hydrostatic fluid pressure in the outlet **216** due to the switch of off the pump apparatus **200** mainly due an obstruction observed in the outlet **216.** Thus, prevents a backflow of the fluid into the pressure chamber **204** and/or the inlet **206.** In an embodiment, the non-return valve **230** may be a check valve having a closing member, such as a valve body **232** which is movable with respect to a valve seat **238** to open or closed the non-return valve **230.** In an open position of the non-return valve **230** (as shown in FIG. **3A**), the valve body **232** is moved away from the valve seat **238** to allow an uninterrupted fluid flow through the non-return valve **230.** In a closed position of the non-return valve **230,** the valve body **232** is moved towards the valve seat **238** to create a seal and block the fluid flow through the non-return valve **230.** The non-return valve **230** may also include a valve spring **234** to exert a restoring force on the valve body **232** and sealingly press the valve body **232** against the valve seat **238.** The non-return valve **230** may further include a sealing member **236,** such as an O-ring valve seal attached to the valve body **232** and configured to abut against the valve seat **238** in the closed position of the non-return valve **230.** It will be apparent to a person having ordinary skill in the art the valve seat **238** may be integrally formed with the pump housing **202.**

According to an embodiment of the present invention, the flow control system **220** includes an actuation mechanism **242** having an actuation element **244.** The actuation element **244** is disposed along a substantially lateral direction with respect to a movement of the valve body **232** and is movable between an operative position (as shown in FIG. **3A**) and an inoperative position with respect to the valve body **232.** In the operative position, the actuation element **244** may apply the counteracting force to move the valve body **232** away from the valve seat **238** towards the open position. The counteracting force acting on the valve body **232** acts against the restoring force exerted by the valve spring **234** on the valve body **232.** In the inoperative position of the actuation element **244,** the counteracting force acting on the valve body **232** is released. Thus, while the actuation element **244** is in the inoperative position and while the hydrostatic fluid pressure in the pressure chamber **204** equals the hydrostatic fluid pressure in the outlet **216,** the valve body **232** can move towards the valve seat **238** under the action of the restoring force **RF.** In the illustrated embodiment, the actuation element **244** is embodied as control pin having a substantially wedge shaped or conical engagement portion **248** which is configured to contact with a cam surface **240** of the valve body **232** and forcibly push the valve body **232** and the sealing member **236** away from the valve seat **238.** According to an aspect of the present invention the actuation element **244** is constantly biased towards the operative position by a positioning spring **246.** In an aspect of the present invention, the spring force exerted by the positioning spring **246** is greater than the restoring force exerted by the valve spring **234.** However, during a normal working status of the pump apparatus **200** the hydrostatic fluid pressure, equal to or above the threshold start-up pressure, may be present in the pressure chamber **204** and the outlet **216.** Further, to achieve a leak-proof sealing in the pump housing **202** during the movement of the actuation element **244** one or more sealing members **250,** such as O-rings are provided.

During the starting-up of the pump apparatus **200,** generally after a new installation or after performing a maintenance operation, while the actuation element **244** is in the operative position and the valve body **232** is forcibly moved away from the valve seat **238** towards the open position, any air already present in the pump apparatus **200** can flow out and an inflow of the fluid into the pump apparatus **200** is facilitated.

Further, the counteracting force exerted by the positioning spring **246** is pre-set at slightly less combined force of threshold start-up pressure in the pump apparatus **200** and the restoring force **RF.** Thus, during the normal working status of the pump apparatus **200** the actuation element **244** is configured to be moved to the inoperative position by the hydrostatic fluid pressure in the pressure chamber **204.** The hydrostatic fluid pressure in the pressure chamber **204** may act against the spring force of the positioning spring **246** and releases the counteracting force acting on the valve body **232** of the non-return valve **230.** Further, as illustrated in FIG. **3B****,** during the normal working status of the pump apparatus **200,** as the hydrostatic fluid pressure in the pressure chamber **204** and the outlet **216** is substantially equal, the uninterrupted fluid flow through the non-return valve **230** is sufficient to retain the valve body **232** in the open position and the pressurized fluid is delivered at the outlet **216.**

According to an embodiment of the present invention, the pump apparatus **200** includes a flow sensor comprising of a magnetic element **254** and a Hall-effect sensor/transducer **256.** The magnetic element **254** is attached to the valve body **232** and configured to generate a dynamic magnetic field in response to a movement of the valve body **232** between the open position and the closed position of the non-return valve **230.** The Hall-effect sensor **256** is fixedly mounted on outer wall of the non-return valve **230.** The Hall-effect sensor **256** is configured to outputting a voltage or a current signal based on a position of the magnetic element **254** from the Hall-effect sensor **256.** Further, the Hall-effect sensor **256** may be calibrated against the magnetic field strength corresponding to the open and the closed position of the non-return valve **230** and and monitor a fluid flow rate through the non-return valve **230.** The pump apparatus **200** may further include a pressure sensor **252,** such as a piezoelectric sensor, a strain gauge sensor or a bistable mechanical pressure switch which is configured to monitor the hydrostatic fluid pressure in the outlet **216.** The Hall-effect sensor **256** and the pressure sensor **252** may be operatively connected to a programmable controller (not shown) which is configured to control an operation of the pump apparatus **200.** The controller is configured to receive a voltage or current signal indicative of the fluid flow rate through the non-return valve **230** and the hydrostatic fluid pressure in the outlet **216** from the Hall-effect sensor **256** and the pressure sensor **252,** respectively. Based on the received signal by the controller may transmit control signals to control the operation of the pump apparatus **200.**

Referring to FIG. **3C****,** according to an aspect of the present invention, when the operator shuts the outlet **216** such that the fluid flow rate through the non-return valve **230** decreases and the fluid flow ceases and the valve body **232** moves towards the closed position. The controller stops the operation of the pump apparatus **200** based on the control signal received from the Hall-effect sensor **256.** Thus, the hydrostatic fluid pressure in the pressure chamber **204** rapidly decreases. In this situation, the restoring force and the hydrostatic fluid pressure in the outlet **216** act on the valve body **232** such that the combined force due to the restoring force from the valve spring **234** and the hydrostatic fluid pressure acting on the valve body **232** is more than the counteracting force exerted by the positioning spring **246.** Thus, the actuation element **244** cannot move to the operative position to open the non-return valve **230** and the non-return valve **230** automatically prevents the backflow of the fluid in the pressure chamber **204** and/or the suction line.

Following this, if the operator opens the the outlet **216** such that the hydrostatic fluid pressure in the outlet **216** decreases and reaches the threshold start-up pressure, the controller starts the operation of the pump apparatus **200,** based on the control signal received from the pressure sensor **252.** Thus, the hydrostatic fluid pressure in the pressure chamber **204** gradually increases and the non-return valve **230** opens by moving the valve body **232** to the open position. The actuation element **244** is moved to the inoperative position by the fluid pressure acting on the actuation element **244.**

In an alternative embodiment, the actuation mechanism/actuation element may be embodied as a biasing member, such as a compression spring or tension spring, disposed within the pump housing **302** and arranged in a direction which is in-line with the movement of the valve body **332** and configured to constantly bias the valve body **332** in the open position.

In the drawings and specification, there have been disclosed preferred embodiments and examples of the invention and, although specific terms are employed, they are used in a generic and descriptive sense only and not for the purpose of limitation of the scope of the invention being set forth in the following claims.

### PART LIST

- 100: pumping device
- 102: pump
- 104: fluid reservoir
- 106: fluid release control valve
- 108: pump housing
- 110: pressure chamber
- 112: electric motor
- 114: inlet
- 116: outlet
- 118: suction line
- 120: discharge line
- 122: flow control system
- 124: non-return valve
- 126: closing member
- 127: valve seat
- 128: actuation mechanism
- 129: valve spring
- 130: actuation element
- 132: positioning means
- 134: sensor unit
- 136: controller
- RF: restoring force
- CF: counteracting force
- 200: pump apparatus
- 202: pump housing
- 204: pressure chamber
- 205: motor chamber
- 206: inlet
- 208: inlet connection port
- 210: pump filter unit
- 212: filling port
- 214: sealing cap
- 216: outlet
- 220: flow control system
- 222: outlet connection port
- 224: second sealing cap
- 226: handle
- 229: drain screw
- 230: non-return valve
- 232: valve body
- 234: valve spring
- 236: sealing member
- 238: valve seat
- 240: cam surface of valve body
- 242: actuation mechanism
- 244: actuation element
- 246: positioning spring
- 248: engagement portion of actuation element
- 250: sealing members
- 252: pressure sensor
- 254: magnetic element
- 256: Hall-effect sensor

## Claims

1. A pumping device (**100, 200**) comprising:
a rotodynamic pump (**102**) with a pump housing (**108**) which defines a pressure chamber (**110**) that houses an impeller, a propeller or a rotor which is driven by an electric motor (**112**),
and a flow control system (**122, 220**), with the flow control system (**122, 220**) comprising:
a non-return valve (**124, 230**) having a closing member (**126, 232**) movable between an open position and a closed position to allow a unidirectional fluid flow,
the non-return valve (**124, 230**) includes a restoring means (**129**) to apply a restoring force (**RF**) on the closing member (**126, 232**) to maintain the closing member (**126, 232**) in closed position; and
an actuation mechanism (**128, 242**) having an actuation element (**130**, **244**) movable between an operative position and an inoperative position with respect to the closing member (**126, 232**), wherein in the operative position the actuation element (**130**, **244**) applies a
counteracting force (**CF**) to move the closing member (**126, 232**) towards the open position,
**characterized in that**
the actuation element (**130, 244**) is biased towards the operative position caused by a positioning means (**132**),
where the counteracting force (**CF**) exerted by the positioning means (**132**) is greater than the restoring force (R**F**) exerted by a valve spring forming the restoring means (**129**) on the closing member (**126, 232**),
where the electric motor (**112**) of the rotodynamic pump (**102**) is switched off as no fluid flow is detected and the hydrostatic fluid pressure in a discharge line (**120**) is equal to or above a threshold start-up pressure,
and where a combined force due to the restoring force (**RF**) and the hydrostatic fluid pressure acting on the closing member (**126**) is more than the counteracting force (**CF**) exerted by the positioning means (**132**).

2. The pumping device (**100, 200**) according to claim 1, wherein the actuation element (**130, 244**) is configured to be moved to the inoperative position by a fluid pressure acting on the actuation element (**130, 244**).

3. The pumping device (**100, 200**) according to claim 1, wherein the positioning means (**132, 246**) is a spring.

4. The pumping device (**100, 200**) according to claim 1 further comprises:
at least one inlet (**114, 206**);
at least one outlet (**116, 216**); and
the pump housing (**108, 202**) defining the pressure chamber (**110, 204**) in fluid communication with the at least one inlet (**114, 206**) and the outlet (**116, 216**), wherein the inlet (**114, 206**) is connected to a suction line (**118**) and the outlet (**116, 216**) is connected to the discharge line (**120**) and the flow control system (**122, 220**) disposed on the discharge line (**120**).

5. The pumping device (**100, 200**) according to claim 4 further comprising a pressure sensor (**134, 252**) configured to monitor a fluid pressure in the discharge line (**120**), and a controller (**136**) operatively connected to the pressure sensor (**134, 252**), the controller (**136**) is configured to:
start an operation of the pumping device (**100, 200**) in case the fluid pressure in the discharge line (**120**) drops below a threshold start-up pressure.

6. The pumping device (**100, 200**) according to claim 4 further comprising a flow sensor (**134, 256**) configured to monitor a fluid flow rate in the discharge line (**120**), and a controller (**136**) operatively connected to the flow sensor (**134, 256**), the controller (**136**) is configured to:
stop an operation of the pumping device (**100, 200**) in case a fluid flow ceases.

7. The pumping device (**100, 200**) according to claim 6, wherein the flow sensor (**134, 256**) is a Hall-effect sensor (**256**).

## Patentansprüche

1. Pumpvorrichtung (**100, 200**), umfassend:
eine rotodynamische Pumpe (**102**) mit einem Pumpengehäuse (**102**), das eine Druckkammer (**110**) bildet, die ein Laufrad, einen Propeller oder einen Rotor aufnimmt, der von einem Elektromotor (**112**) angetrieben wird,
und ein Durchflussregelsystem (**122, 220**), wobei das Durchflussregelsystem (**122, 220**) umfasst:
ein Rückschlagventil (**124, 230**) mit einem Schließelement (**126, 232**), das zwischen einer offenen und einer geschlossenen Position bewegbar ist, um einen unidirektionalen Fluidstrom zu ermöglichen,
wobei das Rückschlagventil (**124, 230**) ein Rückstellmittel (**129**) aufweist, um eine Rückstellkraft (RF) auf das Schließelement (**126, 232**) auszuüben, um das Schließelement (**126, 232**) in geschlossener Position zu halten; und
einen Betätigungsmechanismus (**128, 242**) mit einem Betätigungselement (**130, 244**), das zwischen einer Betriebsstellung und einer Ruhestellung in Bezug auf das Schließelement (**126, 232**) bewegbar ist, wobei das Betätigungselement (**130, 244**) in der Betriebsstellung eine Gegenkraft (CF) aufbringt, um das Schließelement (**126, 232**) in Richtung der offenen Stellung zu bewegen,
**dadurch gekennzeichnet, dass**
das Betätigungselement (**130, 244**) durch ein Positioniermittel (**132**) in Richtung der Betriebsstellung vorgespannt ist,
wobei die von den Positioniermitteln (**132**) ausgeübte Gegenkraft (CF) größer ist als die von einer Ventilfeder ausgeübte Rückstellkraft (RF), die das Rückstellmittel (**129**) auf das Schließelement (**126, 232**) bildet,
wobei der Elektromotor (**112**) der rotodynamischen Pumpe (**102**) abgeschaltet wird, wenn kein Fluidstrom erfasst wird und der hydrostatische Fluiddruck in einer Druckleitung (**120**) gleich oder höher als ein Schwellenanlaufdruck ist,
und wobei eine kombinierte Kraft durch die Rückstellkraft (RF) und den auf das Schließelement (**126**) wirkenden hydrostatischen Fluiddruck größer ist als die durch die Positioniereinrichtung (**132**) ausgeübte Gegenkraft (CF).

2. Pumpvorrichtung (**100, 200**) nach Anspruch 1, wobei das Betätigungselement (**130, 244**) durch einen auf das Betätigungselement (**130, 244**) wirkenden Fluiddruck in die Ruhestellung bewegbar ist.

3. Pumpvorrichtung (**100, 200**) nach Anspruch 1, wobei die Positioniereinrichtung (**132, 246**) eine Feder ist.

4. Die Pumpvorrichtung (**100, 200**) nach Anspruch 1, ferner umfassend:
mindestens einen Einlass (**114, 206**);
mindestens einen Auslass(**116, 216**); und
das Pumpengehäuse (**108, 202**), das die Druckkammer (**110, 204**) in Fluidverbindung mit dem mindestens einen Einlass (**114, 206**) und dem Auslass (**116, 216**) bildet, wobei der Einlass (**114, 206**) mit einer Saugleitung (**118**) verbunden ist und der Auslass (**116, 216**) mit der Druckleitung (**120**) und dem an der Druckleitung (**120**) angeordneten Durchflussregelsystem (**122, 220**) verbunden ist.

5. Die Pumpvorrichtung (**100, 200**) nach Anspruch 4, ferner umfassend einen Drucksensor (**134, 252**), der ausgebildet ist, um einen Fluiddruck in der Druckleitung (**120**) zu überwachen, und einen Regler (**136**), der mit dem Drucksensor (**134, 252**) betriebsmäßig verbunden ist, wobei der Regler (**136**) ausgebildet ist um:
einen Betrieb der Pumpe (**100, 200**) zu starten, wenn der Flüssigkeitsdruck in der Druckleitung (**120**) unter einen Schwellenanlaufdruck fällt.

6. Die Pumpvorrichtung (**100, 200**) nach Anspruch 4, ferner umfassend einen Strömungssensor (**134, 256**), der so ausgebildet ist, dass er einen Fluiddurchfluss in der Druckleitung (**120**) überwacht, und einen Regler (**136**), der mit dem Strömungssensor (**134, 256**) betriebsmäßig verbunden ist, wobei der Regler (**136**) ausgebildet ist:
um einen Betrieb der Pumpvorrichtung (**100, 200**) stoppen, wenn ein Flüssigkeitsstrom ausbleibt.

7. Pumpvorrichtung (**100, 200**) nach Anspruch 6, wobei der Strömungssensor (**134, 256**) ein Halleffekt-Sensor (**256**) ist.

## Revendications

1. Un dispositif de pompage (100, 200) comprenant:
une pompe rotodynamique (102) avec un boîtier de pompe (102) qui définit une chambre de pression (110) qui loge une turbine, une hélice ou un rotor qui est entraîné par un moteur électrique (112),
et un système de contrôle de flux (122, 220), avec le système de contrôle de flux (122, 220) comprenant:
un clapet anti-retour (124, 230) ayant un élément de fermeture (126, 232) mobile entre une position ouverte et une position fermée pour permettre un écoulement de fluide unidirectionnel,
le clapet anti-retour (124, 230) comprend un moyen de rappel (129) pour appliquer une force de rappel (RF) sur l'élément de fermeture (126, 232) afin de maintenir l'élément de fermeture (126, 232) en position fermée; et
un mécanisme d'actionnement (128, 242) ayant an élément d'actionnement (130, 244) mobile entre une position de fonctionnement et une position de repos par rapport à l'élément de fermeture (126, 232), dans lequel dans la position de fonctionnement l'élément d'actionnement (130, 244) applique une force antagoniste (CF) pour déplacer l'élément de fermeture (126, 232) vers la position ouverte,
**caractérisé en ce que**
l'élément d'actionnement (130, 244) est sollicité vers la position de fonctionnement à cause d'un moyen de positionnement (132),
où la force antagoniste (CF) exercée par le moyen de positionnement (132) est supérieure à la force de rappel (RF) exercée par un ressort de clapet formant le moyen de rappel (129) sur l'élément de fermeture (126, 232),
où le moteur électrique (112) de la pompe (102) est éteint car aucun écoulement de fluide n'est détecté et la pression de fluide hydrostatique dans la conduite de décharge (120) est égale ou supérieure à une pression de démarrage minimale,
et où une force combinée causée par la force de rappel (RF) et la pression de fluide hydrostatique agissant sur l'élément de fermeture (126) est supérieure à la force antagoniste (CF) exercée par le moyen de positionnement (132).

2. Le dispositif de pompage (100, 200) selon la revendication 1, dans lequel l'élément d'actionnement (130, 244) est configuré pour être déplacé vers la position de repos par une pression de fluide agissant sur l'élément d'actionnement (130, 244).

3. Le dispositif de pompage (100, 200) selon la revendication 1, dans lequel le moyen de positionnement (132, 246) est un ressort.

4. Le dispositif de pompage (100, 200) selon la revendication 1 comprenant en outre:
au moins une entrée (114, 206);
au moins une sortie (116, 216); et
le boîtier de pompe (108, 202) définissant la chambre de pression (110, 204) en communication de fluide avec l'au moins une entrée (114, 206) et la sortie (116, 216), dans lequel l'entrée (114, 206) est connectée à une conduite d'aspiration (118) et la sortie (116, 216) est connectée à la conduite de décharge (120) et le système de contrôle de flux (122, 220) disposé sur la conduite de décharge (120).

5. Le dispositif de pompage (100, 200) selon la revendication 4 comprenant en outre un capteur de pression (134, 252) configuré pour surveiller une pression de fluide dans la conduite de décharge (120), et un dispositif de commande (136) relié fonctionnellement au capteur de pression (134, 252), le dispositif de commande (136) est configuré pour:
déclencher une opération du dispositif de pompage (100, 200) au cas où la pression de fluide dans la conduite de décharge (120) tombe en dessous d'une pression de démarrage minimale.

6. Le dispositif de pompage (100, 200) selon la revendication 4 comprenant en outre un capteur de débit (134, 256) configuré pour surveiller un débit de fluide dans la conduite de décharge (120), et un dispositif de commande (136) connecté fonctionnellement au capteur de débit (134, 256), le dispositif de commande (136) est configuré pour:
arrêter une opération du dispositif de pompage (100, 200) en cas de cessation d'un débit de fluide.

7. Le dispositif de pompage (100, 200) selon la revendication 6, dans lequel le capteur de débit (134, 256) est un capteur à effet Hall (256).
